# EUROPEAN PATENT APPLICATION

(11) **EP 0 808 999 A1**
(43) Date of publication of application: **26.11.1997**
(21) Application number: 96303552.2
(22) Date of filing: 20.05.1996
(51) Int. Cl.: F01N 3/20

(54) **Purification control device for exhaust gas**

(71) Applicant: FUJI OOZX INC., Fujisawa-shi, Kanagawa-ken (JP)
(72) Inventor: Mori, Akiyoshi, Fujisawa-shi, Kanagawa-ken (JP)
(74) Representative: Bubb, Antony John Allen

(57) **Abstract**

An exhaust control valve (3) is connected to an exhaust manifold (2) of an internal combustion engine of an automobile. In the exhaust control valve, either of two valve discs (9,10) is opened, and an exhaust gas flows in one of exhaust pipes (15,16). A first catalytic converter (17) is provided on one of the exhaust pipes (16), and a second catalytic converter (19) is provided to a collecting pipe (18) to which the two exhaust pipes are merged. A temperature sensor (31) detects temperature of the second catalytic converter to operate a control circuit (27). When the temperature sensor detects that the second catalytic converter is below 500°C, an actuator (20) is operated by the control circuit via a solenoid valve (22) and a negative pressure tank (24) to open one of the valve discs to flow the exhaust gas into the exhaust pipe having the first catalytic converter to purify hazardous substance in the low temperature exhaust gas.

## Description

### BACKGROUND OF THE INVENTION

The present invention relates to a purification control device for exhaust gas which is exhausted from an internal combustion engine to flow through either of two paths selectively depending on temperature condition, thereby decreasing amount of hazardous substance in the exhaust gas.

In a conventional gasoline engine, hazardous substance in an exhaust gas is purified by a single catalytic converter which is provided in an exhaust pipe. To improve fuel efficiency, recent gasoline engines have a lean-burn system. Such engines have lower exhaust temperature than ordinary gasoline engines. Thus, when exhaust gas is purified by a single catalytic converter provided in an exhaust pipe, it is disadvantageous that it takes a long time to reach to reaction temperature of catalyst and that especially purification for the hazardous substance decreases during idling or low load operation right after starting of an engine.

To overcome the disadvantages, it is suggested that an exhaust system has two catalytic converters of low and high temperature active types, an exhaust gas being sent into either of the two catalytic converters selectively via an exhaust control valve which has two paths to improve purification of the exhaust gas. When temperature of the exhaust gas is low and when temperature of high temperature active type catalytic converter is still low right after starting of the engine, the exhaust gas flows in the low temperature active type catalytic converter provided in the vicinity of the exhaust manifold. On the contrary, when the high temperature active type catalytic converter is sufficiently heated, exhaust gas to the low temperature active type catalytic converter is blocked, and the exhaust gas control valve is controlled to flow the exhaust gas in the high temperature active type catalytic converter.

To control the exhaust control valve as above, right after starting of the engine, it is necessary to control suitable actuators at any time to open a valve disc of the low temperature active type catalytic converter and to close a valve disc of the high temperature active catalytic converter.

However, in such a control system, for example, when an engine temporarily stops after high speed driving and starts again after a short time so that temperature of an engine and high temperature type catalytic converter is sufficiently high and exhaust gas is purified without problem, high temperature exhaust gas flows in the low temperature catalytic converter. Thus, active substance in the low temperature active type catalytic converter is exposed to high temperature exhaust gas, thereby increasing deterioration and reducing purification to the exhaust gas.

It is considered that the valve disc of the exhaust gas control valve is thermally expanded to obstruct smooth operation, and it is necessary to increase a clearance between the valve disc and a body in which the valve disc is contained in view of thermal expansion. However, such structure breaks sealing capability and increases leakage of exhaust gas when the valve is opened.

### SUMMARY OF THE INVENTION

To solve the foregoing disadvantages, it is an object of the present invention to provide a purification control device for an exhaust gas wherein the exhaust gas is prevented from flowing in a low temperature active type catalytic converter even right after starting of an engine when temperature of the engine and a high temperature active type catalytic converter is sufficiently high, thereby preventing deterioration of a catalyst and increasing purification of exhaust gas.

To achieve the object, according to the present invention, there is provided a purification control device for exhaust gas, comprising an exhaust control valve connected to an exhaust manifold of an engine and having two valve discs in two paths respectively; two exhaust pipes which communicate with the paths of the exhaust control valve respectively, when one of the paths is opened with one of the valve discs, the other path being closed with the other of the valve discs to flow the exhaust gas to either of the two exhaust pipes via the opened path of the exhaust control valve; an actuator connected to the exhaust control valve to drive the exhaust control valve; a first catalytic converter of low temperature active type provided on one of the exhaust pipes; a collecting pipe to which the two exhaust pipes are merged; a second catalytic converter of high temperature active type on the collecting pipe; temperature measuring means for detecting temperature of the second catalytic converter; and a control circuit connected to the temperature measuring means, an ignition key and the actuator, wherein when the ignition key is "on" and when said temperature measuring means detects that the second catalytic converter is below predetermined temperature, said actuator is operated by the control circuit to open one of the valve discs in the exhaust control valve so that the exhaust gas flows into the exhaust pipe having the first catalytic converter, while the other valve disc is closed.

Only when the second catalytic converter of high temperature active type is below predetermined temperature, the valve disc for the first catalytic converter of low temperature active type is opened, whereby high temperature gas which flows from the engine and the second catalytic converter having high temperature is prevented from flowing into the first catalytic converter.

Thus, the first catalytic converter is prevented from deterioration, so that purification capability of exhaust gas is kept for a long time, thereby increasing durability.

Because thermal load of the valve disc for the first catalytic converter is reduced and thermal expansion of the disc is decreased, a clearance between the valve disc and the path which contains it can be set smaller previously. Therefore, sealing capability when the valve disc is opened is increased and leakage of exhaust gas is kept at minimum.

### BRIEF DESCRIPTION OF THE DRAWINGS

The features and advantages of the present invention will become more apparent from the following description with respect to embodiments as shown in appended drawings wherein:
Fig. 1 is a schematic view of a whole exhaust system which shows one embodiment of the present invention;
Fig. 2 is an enlarged horizontal sectioned plan view taken along the line II-II in Fig. 1;
Fig. 3 is an enlarged vertical sectioned side view taken along the line III-III in Fig. 2; and
Fig. 4 is a flow chart which shows action of the present invention.

### DETAILED DESCRIPTION OF THE PREFERRED EMBODIMENTS

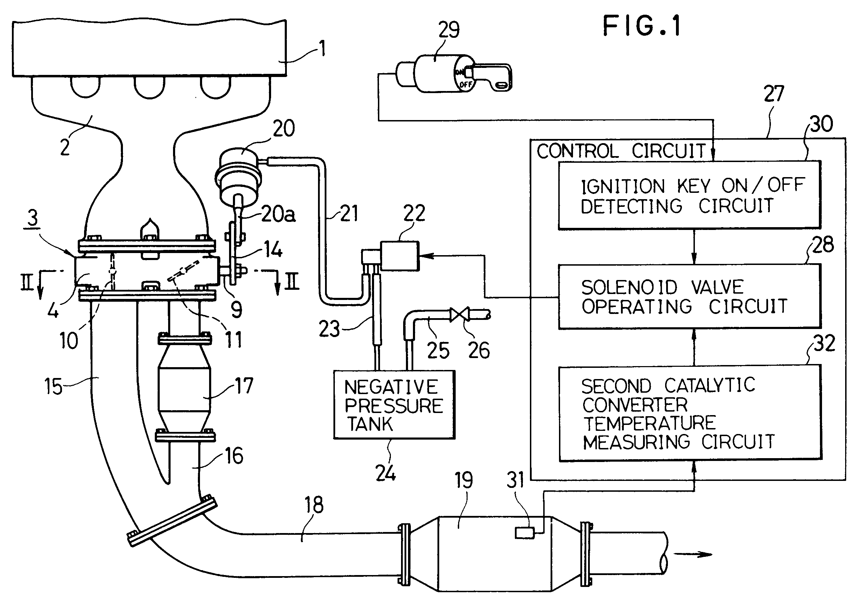

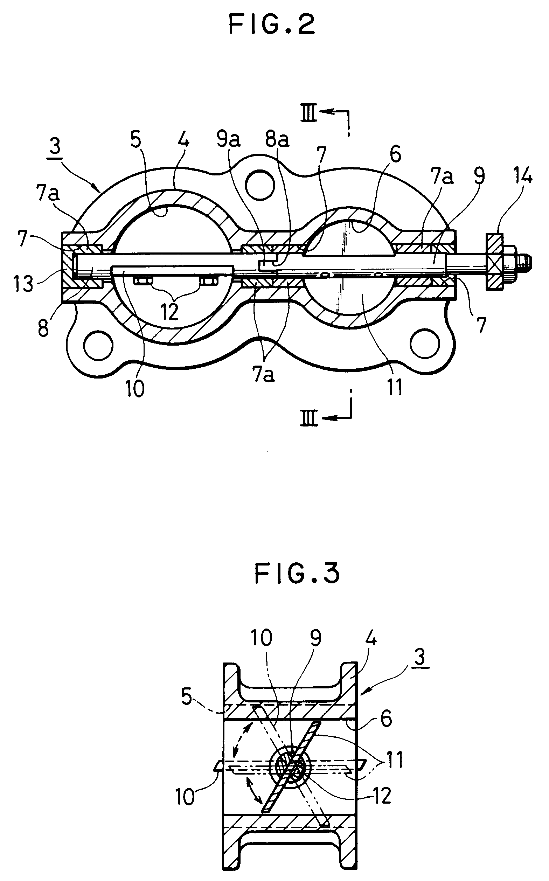

Fig. 1 schematically illustrates an exhaust system to which the present invention is applied, wherein 1 denotes a gasoline engine, and 2 denotes an exhaust manifold in which the lower portion is forked. An exhaust control valve 3 is mounted to the lower end of the exhaust manifold 2. As illustrated in Figs. 2 and 3 in detail, a body 4 of the exhaust control valve 3 has two larger and smaller paths 5 and 6 in parallel with each other, which communicate with forked pipes of the exhaust manifold 2. In this embodiment, the larger diameter path 5 is a main path, while the smaller diameter path 6 is a sub path.

In the middle of the body 4, an axial bore 7 is provided perpendicular to the paths 5 and 6, and has two valve shafts 8 and 9 which are rotatably supported by a bearing 7a. The valve shafts 8 and 9 are connected by engaging a groove 8a of one of the shafts with the other in the middle of the body 4. On the valve shafts 8 and 9, elliptical valve discs 10 and 11 for opening and closing the paths 5 and 6 respectively are fixed by bolts 12. As shown in Fig. 3, the valve discs 10 and 11 are fixed such that when one 10 of the valve discs wholly opens the path 5, the other 11 wholly closes the path 6 as shown by solid and dotted lines in Fig. 3. When one 11 of the valve discs wholly closes the path 5, the other 11 wholly opens the path 6 as shown by two dotted lines. 13 denotes a sealing member which seals the axial bore 7 at the left end.

At the projected end of the valve shaft 9 rightward from the axial bore 7, a drive lever 14 for connecting the shaft with an actuator which will be described later is secured by a screw.

A main exhaust pipe 15 is connected to the downstream end of the path 5 of the exhaust control valve 3, and a by-pass pipe 16 which merges with the main exhaust pipe 15 at the lower end is connected to the downstream end of the path 6. The by-pass pipe 16 has a first catalytic converter 17 of low temperature active type. A collecting pipe 18 is connected to a merged portion of the main exhaust pipe 15 and the by-pass pipe 16, and has a second catalytic converter 19 of high temperature active type on the way. The exhaust gas which passes in the second catalytic converter 19 passes through a muffler (not shown) and is discharged to the outside.

A drive rod 20a of a negative pressure type actuator 20 is connected to a drive lever 14 of the exhaust control valve 3. Only when the actuator 20 is subjected to negative pressure, the drive rod 20a is pulled and the drive lever 14 is rotated, so that the valve disc 11 usually closed is wholly opened and the valve disc 10 usually opened is wholly closed.

The actuator 20 is connected via a tube 21 to the solenoid valve 22, which is connected via a tube 23 to a negative pressure tank 24, which is connected to a negative pressure source such as a vacuum pump or air inlet pipe (not shown) driven by the engine 1 such that the negative pressure tank 24 is kept under reduced pressure for a predetermined time even when the engine 1 stops. The solenoid valve 22 is electrically connected to a solenoid valve operating circuit 28 in a control circuit 27 and operated by signals generated thereby.

An ignition key 29 is electrically connected to an ignition key on/off detecting circuit 30 in the control circuit 27. When the ignition key 29 is "on" or when the engine 1 operates, signals are given to the solenoid valve operating circuit 28 by the ignition key on/off detecting circuit 30.

A temperature sensor 31 is mounted on the second catalytic converter 19, and is electrically connected to a second catalytic converter temperature measuring circuit 32 in the control circuit 27. The second catalytic converter temperature measuring circuit 32 generates signals to the solenoid valve operating circuit 28 when the temperature of the second catalytic converter 19 is below a predetermined temperature such as 500° C or reaction temperature of the catalyst.

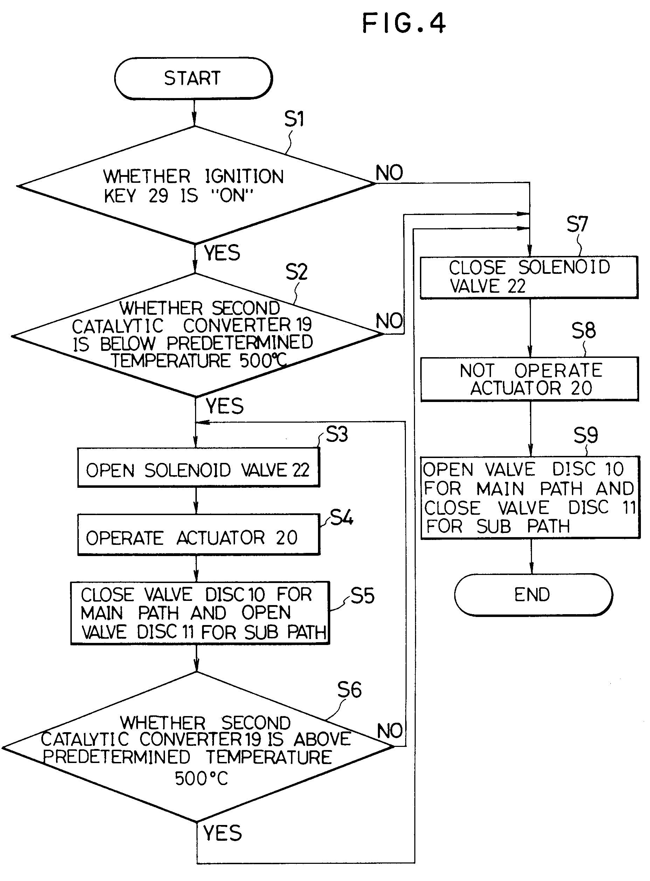

The operation of the foregoing embodiment will be described with respect to a flow chart in Fig. 4. To facilitate understanding of opening and closing of the valve discs 10 and 11 in the exhaust control valve 3, the valve discs 10 and 11 seen from a position different from an actual situation is conveniently shown in the exhaust control valve 3 in Fig. 1.

First, the ignition key 29 turns on (Step S1), and the engine 1 is started. When the second catalytic converter 19 is below predetermined temperature such as 500°C (Step S2), the solenoid valve operating circuit 28 operates based on signals which are generated by the ignition key on/off detecting circuit 30 and the second catalytic converter temperature measuring circuit 32, and the solenoid valve 22 is operated to valve opening condition. (Step S3) When the solenoid valve 22 operates, negative pressure in the negative pressure tank 24 acts to the actuator 20, and the piston rod 20a is pulled. (Step S4) Thus, the drive lever 14 is rotated, the valve disc 10 in the main path of the exhaust control valve 3 is closed, while the valve disc 11 in the sub path is opened. (Step S5)

As mentioned above, when the actuator 20 is not operated owing to stoppage of the engine 1, the valve disc 10 is opened and the valve disc 11 is closed owing to force of a return spring (not shown) in the actuator 20. Owing to opening of the valve disc 11, the exhaust gas flows into the by-pass pipe 16, and hazardous substance such as HC and CO contained in relatively low temperature exhaust gas right after starting of the engine is purified.

The engine 1 and the second catalytic converter 19 are gradually warmed up, and reach to temperature where catalytic reaction can start (Step S6), so that the solenoid valve 22 is closed by the solenoid valve control circuit (Step S7), and the actuator 20 is put in non-operating condition. (Step S8) Then, the valve disc 10 is opened, while the valve disc 11 is closed. (Step S9) Accordingly, exhaust gas flows into the main exhaust pipe 15, and hazardous substance such as HC, CO and NOx contained in relatively high temperature exhaust gas is purified by the second catalytic converter 19.

When the second catalytic converter 19 does not reach to a predetermined temperature (Step S6), the solenoid valve 22 is kept in an opened condition (Step S2), so that the valve disc 10 is closed and the valve disc 11 is kept in opened position. (Step S5) When the ignition key 29 is "off" or when the second catalytic converter 19 is above the predetermined temperature (Steps S1 and S2), the solenoid valve operating circuit 28 does not operate, so that the solenoid valve 22 does not operate (Step S7), and the valve disc 10 is opened, while the valve disc 11 is closed.

As described above, in the foregoing embodiment, only when the second catalytic converter 19 is below predetermined temperature, the valve disc 11 is opened, and exhaust gas passes to the first catalytic converter 17. But when it is not placed under such condition, the valve disc 11 is closed, and high temperature exhaust gas is prevented from flowing into the first catalytic converter 17 in case that the temperature of the engine is sufficiently high and the temperature of exhaust gas discharged therefrom is high, for example, when the engine temporarily stops right after high speed driving and starts again after a short time. As a result, purification capability of exhaust gas is prevented from decreasing by deterioration of the first catalytic converter, thereby increasing durability greatly.

Also, thermal load of the valve disc 11 which is opened and closed at relatively low temperature is reduced, so that thermal expansion is kept at minimum. Accordingly, it is not necessary to increase a clearance between the valve disc 11 and the path 6 in view of thermal expansion, thereby decreasing leakage of exhaust gas to the by-pass pipe 16 by increasing sealing capability of the valve disc 11.

The present invention is not limited to the foregoing embodiments. For example, when the engine stops in the foregoing embodiment, the valve disc 11 may be opened and the valve disc 10 may be closed. In this case, the actuator 20 does not operate when the second catalytic converter 19 is below predetermined temperature, and the actuator operates when it is above predetermined temperature, the valve disc 11 is closed and the valve disc 10 is opened. For example, when the engine stops right after high speed driving and starts again after a short time, high temperature gas temporarily flows into the first catalytic converter 7. To prevent it, for example, an interlock circuit is added in the solenoid valve operating circuit 28 of the control circuit, and the actuator 20 may be operated until the temperature sensor 31 of the second catalytic converter 19 detects below predetermined temperature such as 500°C owing to remaining negative pressure in the negative pressure tank 24.

The actuator 20 may be compression air type such as an air cylinder, electromagnetic cylinder and electric type instead of negative pressure type. When the compression air type is applied, the negative pressure tank 24 may be compression tank which is connected to air pump driven by an engine.

To make an electromagnetic type cylinder or electric type, instead of the solenoid valve operating circuit 28 in the control circuit 27, an operating circuit for directly turning the electromagnetic type cylinder on or off, or an operating circuit for controlling an electric drive motor regularly and reversely may be provided.

The negative pressure tank 24 is not always provided, but the solenoid valve 22 may be directly connected to a vacuum pump or the air inlet pipe driven by an engine. In the embodiments, the valve discs 10 and 11 are operated by a single actuator 20, but the valve discs 10 and 11 may be operated by two actuators.

The foregoings merely relate to embodiments of the invention. Various modifications and changes may be made person skilled in the art without departing from the scope of claims wherein:

## Claims

1. A purification control device for exhaust gas, comprising:
an exhaust control valve connected to an exhaust manifold of an engine and having two valve discs in two paths respectively;
two exhaust pipes which communicate with the paths of the exhaust control valve respectively, when one of the paths is opened with one of the valve discs, the other path being closed with the other of the valve discs to flow the exhaust gas to either of the two exhaust pipes via the opened path of the exhaust control valve;
an actuator connected to the exhaust control valve to drive the exhaust control valve;
a first catalytic converter of low temperature active type provided on one of the exhaust pipes;
a collecting pipe to which the two exhaust pipes are merged;
a second catalytic converter of high temperature active type on the collecting pipe;
temperature measuring means for detecting temperature of the second catalytic converter; and
a control circuit connected to the temperature measuring means, an ignition key and the actuator, wherein when the ignition key is "on" and when said temperature measuring means detects that the second catalytic converter is below predetermined temperature, said actuator is operated by the control circuit to open one of the valve discs in the exhaust control valve so that the exhaust gas flows into the exhaust pipe having the first catalytic converter, while the other valve disc is closed.

2. A purification control device as defined in claim 1 wherein the temperature measuring means comprises a temperature sensor.

3. A purification control device as defined in claim 2 wherein the control circuit comprises an ignition key on/off detecting circuit connected to the ignition key; a second catalytic converter temperature measuring circuit connected to the temperature sensor; and a solenoid valve operating circuit connected to the ignition key on/off detecting circuit, the second catalytic converter temperature detecting circuit and a solenoid valve, which is opened when the second catalytic converter is below the predetermined temperature to operate the actuator, so that one of the valve discs is opened and the exhaust gas flows in the first catalytic converter for purification.

4. A purification control device as defined in claim 3 wherein the actuator is connected to the solenoid valve which is connected to a negative pressure tank connected to a negative pressure source.

5. A purification control device as defined in claim 1 wherein the predetermined temperature is 500°C.

6. A purification control device as defined in claim 1 wherein the actuator is connected to the exhaust control valve via a piston rod and a drive lever.
